Europäisches Patentamt

European Patent Office

Office européen des brevets

(19)

(11) Numéro de publication : **0 012 045**
**B1**

(12) **FASCICULE DE BREVET EUROPÉEN**

(45) Date de publication du fascicule du brevet :
13.01.82

(21) Numéro de dépôt : 79400762.5

(22) Date de dépôt : 18.10.79

(51) Int. Cl.³ : **F 16 H 1/16, B 60 S 1/16**

(54) **Moto-réducteur.**

(30) Priorité : 23.11.78 FR 7833039

(43) Date de publication de la demande :
11.06.80 (Bulletin 80/12)

(45) Mention de la délivrance du brevet :
13.01.82 Bulletin 82/02

(84) Etats contractants désignés :
**DE GB IT**

(56) Documents cités :
**DE - A - 1 513 750**
**DE - A - 2 627 645**
**FR - A - 2 095 747**
**FR - A - 2 229 293**
**US - A - 2 749 498**
**US - A - 3 455 174**

(73) Titulaire : **DUCELLIER & Cie**
**Echat 950**
**F-94024 Créteil Cedex (FR)**

(72) Inventeur : **Savelli, François**
**98 Av. du Général de Gaulle**
**F-94500 Champigny (FR)**

(74) Mandataire : **Habert, Roger**
**2, rue Boulle Echat 950**
**F-94024 Créteil Cedex (FR)**

Imprimerie Jouve, 18, rue St-Denis, 75001 Paris, France

Moto-réducteur

Moto-réducteur, notamment pour essuie-glace de véhicules automobiles, constitué d'un boîtier comportant deux chambres, l'une servant de logement au moteur, l'autre de logement au dispositif de réduction comprenant une roue dentée entraînée en rotation par une vis sans fin, laquelle vis est dans le prolongement de l'arbre du moteur.

Dans la plupart des moto-réducteurs connus la cloison séparant les deux chambres joue le rôle d'un palier pour l'arbre commun du moteur et de la vis sans fin, et sert en partie de siège à un coussinet, plus particulièrement une rotule lubrifiée par un joint à réserve d'huile, l'autre partie du siège du coussinet étant constituée par une cuvette déformable élastiquement positionnée coaxialement à la vis sans fin dans un évidement de la cloison.

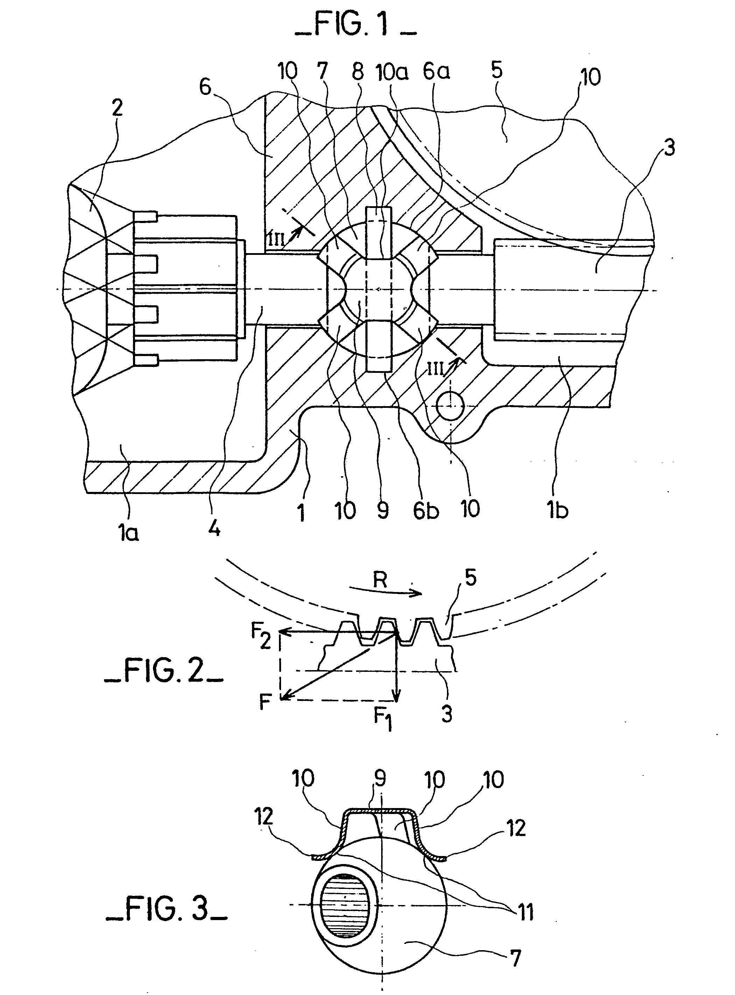

Or, lors du fonctionnement, la réaction des dents de la roue dentée sur le filet de la vis sans fin étant perpendiculaire aux surfaces de contact entre la dent considérée et le filet de la vis (voir flèche F fig. 2), ladite vis se déplace radialement sous l'effet de la force F1 (fig. 2) et axialement sous l'effet de la force F2 (fig. 2), ceci entraîne un éloignement par glissement de la vis par rapport à la roue dentée, ce qui réduit considérablement la surface de contact entre dents et filet et par conséquent réduit le rendement d'un tel dispositif.

Le fait de mettre une cuvette déformable élastiquement coaxialement à la vis sans fin ne permet pas d'amortir les jeux de fonctionnement tels que suivant la flèche F1 (fig. 2), jeux radiaux.

De plus, lors du fonctionnement, apparaît un effet de ressaut de la rotule dans une direction perpendiculaire au plan défini par les flèches F1 et F2, ladite cuvette coaxiale à la vis sans fin en subit les conséquences et bascule, n'assurant plus un siège convenable à la rotule.

La présente invention a pour but de remédier à ces inconvénients et concerne à cet effet un perfectionnement aux moto-réducteurs notamment pour essuie-glace de véhicules automobiles, comportant une cloison de séparation entre le moteur d'entraînement et l'ensemble réducteur constitué d'une roue dentée et d'une vis sans fin, cloison dans laquelle tourillonne l'arbre commun à la vis sans fin et au moteur, par l'intermédiaire d'un palier en forme de rotule logée dans la cloison, rotule autour de laquelle est ajusté un joint annulaire de lubrification, le joint et la rotule étant maintenus dans le logement de ladite rotule par un élément déformable élastiquement qui vient en contact avec la rotule, caractérisé en ce que cet élément déformable élastiquement se présente sous la forme d'une tulipe disposée coaxialement au logement cylindrique de la rotule dans celui-ci, dont l'axe est parallèle à l'axe de la roue dentée, l'élément déformable élastiquement ayant une forme telle que ses pétales sont susceptibles de s'agripper dans les parois du logement de manière telle à limiter un déplacement radial possible de la vis sans fin et déterminent entre eux une rainure dans laquelle se loge le joint de lubrification.

La description qui va suivre en regard des schémas annexés fera mieux comprendre comment l'invention peut être réalisée.

La figure 1 est une vue d'un dispositif selon l'invention le boîtier étant coupé au niveau de l'axe commun du moteur et de la vis sans fin.

La figure 2 représente les forces de réaction de la roue dentée sur le filet de la vis sans fin pour un sens d'entraînement R de la roue dentée.

La figure 3 est une coupe du dispositif selon l'axe III III de la figure 1.

De façon connue ce moto-réducteur se compose d'un boîtier 1 qui comprend deux chambres 1a et 1b. La chambre 1a contient le moteur d'entraînement 2, la chambre 1b contient l'ensemble réducteur constitué d'une vis sans fin 3 disposée en bout de l'arbre 4 du moteur 2, et d'une roue dentée 5.

L'arbre 4 traverse la cloison 6 qui sépare les deux chambres 1a et 1b et prend appui dans un coussinet de forme sphérique ou rotule 7 maintenue dans un logement 6a réalisé dans la cloison 6 et lubrifiée par un joint 8.

Les jeux axiaux F2 sont rattrapés en bout de la vis sans fin à l'aide de moyens connus tels que vis, came ou ressort et ne sont pas représentés.

Conformément à l'invention le logement 6a ouvert du même côté que la chambre 1b se présente sous la forme d'un trou cylindrique borgne dont le fond est sphérique de façon à y recevoir la rotule 7, et comporte, suivant son axe perpendiculaire à l'axe 4 du moteur, une rainure 6b apte à recevoir le joint 8.

Le fait de réaliser ce logement 6a de cette façon autorise une plus grande précision de fabrication pour l'entr'axe entre la roue dentée et la rotule et conséquemment entre la roue dentée et la vis sans fin.

Les moyens de rattrapage des jeux radiaux, c'est-à-dire suivant la flèche F1 de la figure 2, sont constitués par un ressort 9 disposé vers l'ouverture du logement 6a.

Ce ressort 9 est réalisé de préférence en métal déformable élastiquement, du type acier à ressort et se présente sous la forme d'une tulipe à fond plat comportant quatre pétales 10.

L'extrémité libre de chacun de ces pétales 10 est courbée vers l'extérieur du ressort 9 de façon à présenter une surface 11 arrondie au contact de la rotule 7. De plus ce ressort étant métallique l'extrémité libre 12 de ces pétales 10 joue le rôle de griffe au niveau du logement 6a de la rotule 7.

Ces pétales 10 sont disposés de façon telle qu'ils définissent une rainure 10a dans laquelle se positionne le joint 8 lors de l'assemblage.

Ce ressort 9 est alors maintenu dans le logement 6a coaxialement avec le logement par le serrage dû au couvercle (non représenté) du moto-réducteur, lors de l'assemblage.

Dans un dispositif ainsi réalisé, les pétales 10 s'épanouissent lors de l'assemblage sous l'effet du couvercle du moto-réducteur. La surface arrondie 11 sert de rampe qui, lors du fonctionnement du moto-réducteur, sous l'action d'un déplacement radial de la vis sans fin facilite un plus grand épanouissement des pétales 10 qui alors s'agrippent par leur extrémité 12 dans la paroi du logement de la rotule.

Un tel ressort 9 assure donc un positionnement précis de la rotule 7 dans le fond de son logement 6a, emmagasine les ressauts lors du fonctionnement tout en laissant un certain jeu de fonctionnement par sa déformation élastique afin d'éviter les effets de coincement susceptibles d'apparaître surtout au démarrage du moteur et absorbe ainsi les jeux radiaux provoqués par l'action de la roue dentée suivant la flèche F1 de la figure 2.

Il est ainsi obtenu un moto-réductur à plus hautes performances du fait de l'élimination maximum des jeux de fonctionnement notamment au démarrage.

Il est bien évident que des modifications pourront être apportées à une telle réalisation sans sortir pour cela du cadre de l'invention.

## Revendications

1. Moto-réducteur notamment pour essuie-glace de véhicules automobiles, comportant une cloison (6) de séparation entre le moteur d'entraînement (2) et l'ensemble réducteur constitué d'une roue dentée (5) et d'une vis sans fin (3), cloison (6) dans laquelle tourillonne l'arbre (4) commun à la vis sans fin (3) et au moteur (2) par l'intermédiaire d'un palier en forme de rotule (7) logée dans la cloison (6), rotule (7) autour de laquelle est ajusté un joint annulaire (8) de lubrification, le joint (8) et la rotule (7) étant maintenus dans le logement (6a) de ladite rotule (7) par un élément (9) déformable élastiquement qui vient en contact avec la rotule (7), caractérisé en ce que cet élément (9) déformable élastiquement se présente sous la forme d'une tulipe disposée coaxialement au logement cylindrique (6a) de la rotule (7) dans celui-ci dont l'axe est parallèle à l'axe de la roue dentée (5), l'élément déformable élastiquement (9) ayant une forme telle que ses pétales (10) sont susceptibles de s'agripper dans les parois du logement (6a) de manière telle à limiter un déplacement radial possible de la vis sans fin (4) et déterminent entre eux une rainure (10a) dans laquelle se loge le joint de lubrification (8).

2. Moto-réducteur selon la revendication 1 caractérisé en ce que les extrémités (12) des pétales (10) sont recourbées radialement vers l'extérieur pour constituer à la rotule (7) un siège ayant des surfaces de contact minimum et définir une rampe (11) qui, sous l'action d'un déplacement radial de la vis sans fin (4) et conséquemment de la rotule (7) facilite l'épanouissement des pétales (10) qui s'agrippent alors dans la paroi du logement (6a).

## Claims

1. A reduction drive, particularly for a motor vehicle windscreen wiper, comprising a separating partition (6) between the drive motor (2) and the reduction assembly constituted by a toothed wheel (5) and a worm (3), in which partition (6) rotates the shaft (4) common to the worm (3) and to the motor (2) by the intermediary of a bearing in the form of a swivel device (7) housed in the partition (6) and around which is fitted an annular lubricating packing (8), the packing (8) and the swivel device (7) being held within the cavity (6a) of said swivel device (7) by a resiliently deformable element (9) engaged with the swivel device (7), characterized in that this resiliently deformable element (9) is in the form of a tulip disposed co-axially with the cylindrical housing (6a) of the swivel device (7) in the latter, of which the axis is parallel with the axis of the toothed wheel (5), the resiliently deformable element (9) having a form such that its petals (10) are adapted to grip within the walls of the housing (6a) in such a manner as to limit a possible radial displacement of the worm (4) and determining between them a groove (10a) in which the lubrication packing is lodged.

2. A reduction drive according to Claim 1 characterized in that the ends (12) of the petals (10) are curved radially outwardly to constitute, for the swivel device (7) a seat having minimum contact surfaces and to define a ramp (11) which, under the action of a radial displacement of the worm (4) and consequently of the swivel device (7) facilitates the expansion of the petals (10) which then grip within the wall of the housing (6a).

## Ansprüche

1. Getriebemotor, insbesondere für Scheibenwischer von Kraftfahrzeugen, mit einer Trennwand (6) zwischen dem Antriebsmotor (2) und der aus einem Zahnrad (5) und einer Schnecke (3) bestehenden Reduktionsgetriebeanordnung, wobei die der Schnecke (3) und dem Motor (2) gemeinsame Welle (4) in der Trennwand (6) mittels eines Lagers in Form eines in der Trennwand (6) gelagerten Kugelzapfens (7) drehbar ist, der von einer Schmierringdichtung (8) eng umschlossen ist, und wobei die Dichtung (8) und der Kugelzapfen (7) von einem an dem Kugelzapfen (7) anliegenden elastisch deformierbaren Element (9) in dem den Kugelzapfen (7) aufnehmenden Lagerhohlraum (6a) gehalten sind, dadurch gekennzeichnet, daß das elastisch deformierbare Element (9) glockenförmig mit einer Mehrzahl von Klauen (10) ausgebildet und koaxial zum zylindrischen Lagerhohlraum (6a) des Kugelzapfens (7) in dem Lagerhohlraum (6a) angeordnet ist, dessen Achse parallel zur Achse des Zahnrades (5) gerichtet ist, und daß das elastisch deformierbare Element (9) so geformt ist, daß seine Klauen (10) an den Wänden des Lagerhohlraumes (6a) angreifen können, um eine mögliche radiale Auslenkung der Schnecke (3) zu begrenzen, und zwischen sich eine Nut (10a) bilden, in welcher die Schmierringdichtung (8) angeordnet ist.

2. Getriebemotor nach Anspruch 1, dadurch gekennzeichnet, daß die Enden (12) der Klauen (10) radial nach außen gebogen sind, um für den Kugelzapfen (7) einen Sitz mit minimalen Berührungsflächen und einer Rampe (11) zu bilden, die unter der Wirkung einer radialen Verschiebung der Schnecke (3) und damit des Kugelzapfens (7) das Spreizen der Klauen (10) erleichtert, die sich dadurch an der Wand des Lagerhohlraumes (6a) festhaken.

_ FIG. 1 _

_ FIG. 2 _

_ FIG. 3 _